# FASCICULE DE BREVET EUROPEEN

(11) **EP 3 822 199 B1**
(45) Date de publication et mention de la délivrance du brevet: **24.08.2022**
(21) Numéro de dépôt: 20207340.9
(22) Date de dépôt: 13.11.2020
(51) Int. Cl.: B65G 29/00, B65G 47/86

(54) **ETOILE POUR UNE MACHINE DE CONDITIONNEMENT ROTATIVE**
STERN FÜR EINE ROTIERENDE VERPACKUNGSMASCHINE
STAR FOR A ROTARY PACKAGING MACHINE

(30) Priorité: 15.11.2019 FR 1912789
(43) Date de publication de la demande: 19.05.2021
(73) Titulaire: Pack'R, 49070 Beaucouze (FR)
(72) Inventeur: BESSARD, Didier, 49070 BEAUCOUZE (FR)
(74) Mandataire: Cabinet Le Guen Maillet

(56) Documents cités:
- WO-A2-2005/030616
- WO-A2-2015/082381
- US-A- 4 124 112

## Description

### DOMAINE TECHNIQUE

La présente invention concerne une étoile pour une machine de conditionnement rotative, ainsi qu'une machine de conditionnement rotative comportant au moins une telle étoile.

### ETAT DE LA TECHNIQUE ANTERIEURE

Une machine de conditionnement rotative telle qu'une remplisseuse de l'état de la technique est alimentée en récipients à remplir par l'intermédiaire d'un tapis de convoyage d'entrée sur lequel chaque récipient est disposé.

La remplisseuse comprend une étoile et un guide. L'étoile est entraînée en rotation autour d'un axe vertical et comprend des empreintes de forme adaptée à la forme des récipients et régulièrement réparties sur la périphérie de l'étoile. Chaque empreinte est destinée à recevoir un récipient et à le transporter. Le maintien du récipient dans l'empreinte est assuré par le guide qui prend la forme d'un arc de cercle concentrique avec l'axe vertical et qui se situe à l'extérieur de l'étoile pour plaquer les récipients dans le fond des empreintes.

Lorsqu'une remplisseuse peut être utilisée avec des récipients cylindriques de différents diamètres, il est nécessaire de modifier les dimensions de chaque empreinte et la position du guide, ce qui est un travail relativement long et nécessite l'arrêt de la remplisseuse. Le document US 4 124 112 A divulgue une étoile pour une machine de conditionnement rotative pour des récipients selon le préambule de la revendication 1.

Il est donc nécessaire de trouver une étoile qui peut s'adapter rapidement à la dimension des récipients.

### EXPOSE DE L'INVENTION

Un objet de la présente invention est de proposer une étoile pour une machine de conditionnement rotative où l'étoile s'adapte facilement à des récipients de différents diamètres et qui ne nécessite pas l'utilisation d'un guide.

A cet effet, est proposée une étoile pour une machine de conditionnement rotative pour des récipients, l'étoile comportant :
- un arbre qui s'étend verticalement autour d'un axe principal et qui est animé d'un mouvement de rotation autour dudit axe principal,
- un ensemble mobile qui comporte :
   - un châssis fixé audit arbre,
   - une pluralité de paires de bras, chacune comportant deux bras, chacun comportant une extrémité distale et une extrémité proximale et monté articulé sur le châssis autour d'un axe vertical de rotation, où les bras de chaque paire de bras sont mobiles entre une position ouverte et une position fermée et inversement,
   - pour chaque paire de bras, un mécanisme d'actionnement avec un plot d'activation mobile entre une première position extrême et une deuxième position extrême, où dans la première position extrême, le mécanisme d'actionnement positionne les bras de ladite paire de bras en position ouverte et où dans la deuxième position extrême, le mécanisme d'actionnement positionne les bras de ladite paire de bras en position fermée,
   - un mécanisme de réglage qui déplace l'axe vertical de rotation de chaque bras entre une première position et une deuxième position et inversement, et
   - un mécanisme de verrouillage qui verrouille la position de l'axe vertical de rotation de chaque bras entre la première position et la deuxième position, et
   - une came fixe par rapport à l'ensemble mobile et avec une surface de guidage où la forme de la surface de guidage est telle que chaque plot d'activation suit la surface de guidage pour passer successivement de la première position extrême à la deuxième position extrême et inversement.

Avantageusement, l'axe vertical de rotation de chaque bras est disposé entre l'extrémité distale et l'extrémité proximale, chaque mécanisme d'actionnement comporte une première bielle et une deuxième bielle, la première extrémité de la première bielle est montée articulée au niveau de l'extrémité proximale d'un bras, la première extrémité de la deuxième bielle est montée articulée au niveau de l'extrémité proximale de l'autre bras, et la deuxième extrémité de chaque bielle est montée articulée sur le plot d'activation.

Avantageusement, pour chaque paire de bras, le mécanisme de réglage comporte un coulisseau qui est monté mobile en translation radialement par rapport à l'axe principal entre une position rentrée et une position sortie, pour chaque axe vertical de rotation de la paire de bras associée, le coulisseau présente une rainure à travers laquelle passe l'axe vertical de rotation, les deux rainures du coulisseau forment un V dont la pointe est orientée vers l'axe principal, et le mécanisme de réglage comporte un système de déplacement qui déplace chaque coulisseau de la position rentrée à la position sortie et inversement.

Avantageusement, le coulisseau comporte une surface de contact qui constitue un troisième point de contact sur le récipient.

Avantageusement, la distance de déplacement de la surface de contact entre la position rentrée et la position sortie du coulisseau ainsi que les changements de position des axes verticaux de rotation des bras sont tels que la position du barycentre des deux points de contact des bras sur le récipient et du point de contact de la surface de contact sur le récipient reste inchangée quelle que soit la position du coulisseau entre la position rentrée et la position sortie.

Avantageusement, chaque angle défini à partir d'un barycentre des deux points de contact des bras sur le récipient et du point de contact de la surface de contact sur le récipient, et délimité entre le point de contact de la surface de contact et un des points de contact d'un bras est supérieur à 90°.

Avantageusement, chaque coulisseau comporte un plot d'entraînement, le système de déplacement comporte un disque monté mobile en rotation autour de l'axe principal, pour chaque plot d'entraînement, le disque comporte un trou dans lequel loge le plot d'entraînement, chaque trou est conformé pour déplacer le plot d'entraînement d'une position correspondant à la position rentrée du coulisseau à une position correspondant à la position sortie du coulisseau lorsque le disque est déplacé en rotation dans un sens et pour déplacer le plot d'entraînement de la position correspondant à la position sortie du coulisseau à la position correspondant à la position rentrée du coulisseau lorsque le disque est déplacé en rotation dans un sens opposé.

L'invention propose également une machine de conditionnement rotative pour des récipients comportant un système de convoyage d'entrée, un système de convoyage de sortie et une étoile selon l'une des variantes précédentes, où le système de convoyage d'entrée apporte les récipients au niveau de l'étoile et où le système de convoyage de sortie prend les récipients au niveau de l'étoile pour les retirer.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'une étoile selon l'invention pour un récipient de grand diamètre,
[Fig. 2] est une vue de dessous de l'étoile de la Fig. 1,
[Fig. 3] est une vue en perspective de l'étoile de la Fig. 1 pour un récipient de petit diamètre,
[Fig. 4] est une vue en perspective de l'étoile de la Fig. 1 dont certains éléments ont été cachés, dans le cas d'un récipient de grand diamètre,
[Fig. 5] est une vue similaire à celle de la Fig. 4, pour un récipient de petit diamètre,
[Fig. 6] est une vue en perspective de l'étoile de la Fig. 1 dont certains éléments ont été cachés, dans le cas d'un récipient de grand diamètre,
[Fig. 7] est une vue similaire à celle de la Fig. 6, pour un récipient de petit diamètre,
[Fig. 8] est une vue en perspective de l'étoile de la Fig. 1 dont certains éléments ont été cachés, dans le cas d'un récipient de grand diamètre,
[Fig. 9] est une vue similaire à celle de la Fig. 8, pour un récipient de petit diamètre,
[Fig. 10] est une vue en perspective de l'étoile de la Fig. 1 dont certains éléments ont été cachés, dans le cas d'un récipient de grand diamètre,
[Fig. 11] est une vue similaire à celle de la Fig. 10, pour un récipient de petit diamètre,
[Fig. 12] est une vue en perspective de l'étoile de la Fig. 1 dont certains éléments ont été cachés, dans le cas d'un récipient de grand diamètre,
[Fig. 13] est une vue similaire à celle de la Fig. 12, pour un récipient de petit diamètre et
[Fig. 14] est une vue de dessous de l'étoile selon l'invention.

### EXPOSE DETAILLE DE MODES DE REALISATION

Dans la description qui suit, les directions sont prises en référence à un fonctionnement normal d'une machine de conditionnement rotative, et en particulier, la direction verticale orientée vers le haut est représentée par la flèche Z.

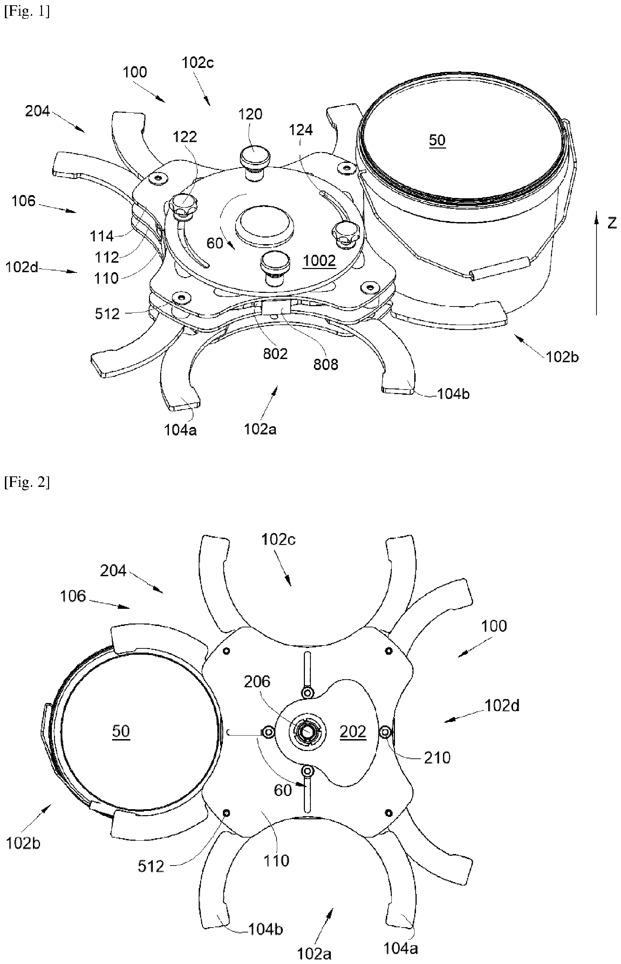

La Fig. 1 montre une étoile 100 d'une machine de conditionnement rotative telle qu'une remplisseuse qui permet de remplir des récipients cylindriques de différents diamètres. Sur les différentes Figs., sont représentés soit un récipient de grand diamètre 50, soit un récipient de petit diamètre 52. L'invention va être plus particulièrement décrite pour une remplisseuse rotative, mais elle s'applique de la même manière à toutes machines de conditionnement rotatives, comme par exemple, une remplisseuse, une étiqueteuse, ou une boucheuse....

Comme la remplisseuse de l'état de la technique, la remplisseuse selon l'invention comporte un système de convoyage d'entrée, tel qu'un tapis, qui apporte les récipients 50, 52 au niveau de l'étoile 100 et un système de convoyage de sortie, tel qu'un tapis, qui prend les récipients 50, 52 au niveau de l'étoile 100 pour les retirer. Un système de convoyage est tout système qui permet de manipuler un récipient, et peut être par exemple un convoyeur à bande, un carrousel, etc.

La Fig. 2 montre l'étoile 100 en vue de dessous. L'étoile 100 comporte une came 202 qui est fixe et un ensemble mobile 204 qui est animé d'un mouvement rotatif 60 autour d'un axe vertical principal. La came 202 est fixe par rapport à l'ensemble mobile 204 et elle est fixée par exemple à un élément de la remplisseuse. La came 202 présente une surface de guidage qui est ici la surface verticale formant la tranche de la came 202.

L'étoile 100 comporte un arbre 206 qui s'étend verticalement et dont l'axe est coaxial avec l'axe principal. L'arbre 206 est entraîné en rotation autour de l'axe principal par tous moyens appropriés comme par exemple un moteur. Ainsi, l'arbre 206 s'étend verticalement autour de l'axe principal et est animé d'un mouvement de rotation autour dudit axe principal.

L'ensemble mobile 204 comporte un châssis 106 fixé à l'arbre 206 et donc entraîné en rotation (60) par celui-ci autour de l'axe principal.

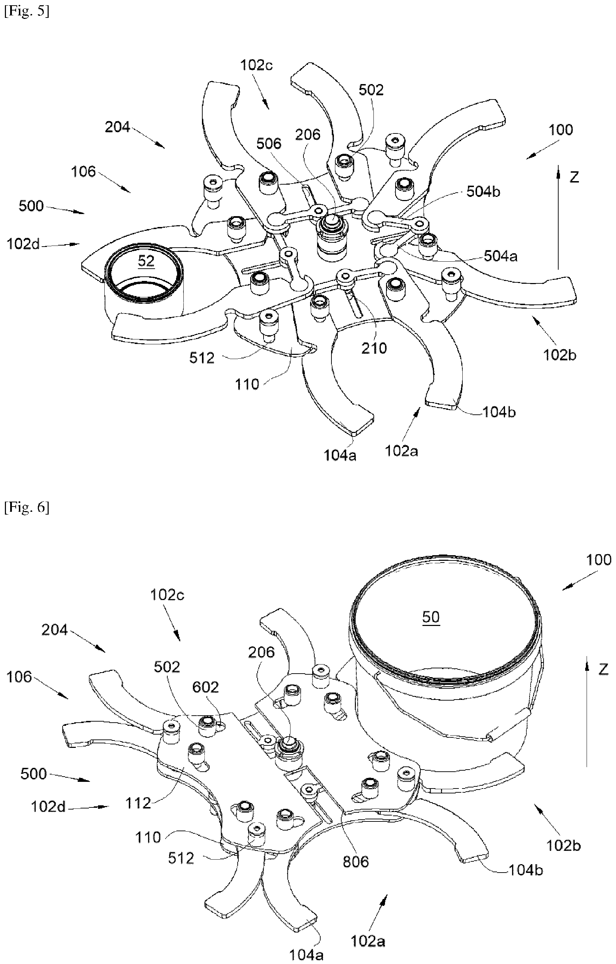

L'ensemble mobile 204 comporte également une pluralité de paires de bras 102a-d (ici au nombre de 4), chacune comportant deux bras 104a-b, chacun comportant une extrémité distale et une extrémité proximale. Chaque bras 104a-b est monté articulé sur le châssis 106 autour d'un axe vertical de rotation (502, Fig. 5). Les bras 104a-b de chaque paire de bras 102a-d sont mobiles entre une position ouverte et une position fermée et inversement. En position ouverte, les extrémités distales sont écartées pour laisser passer le récipient 50, 52 et en position fermée, les extrémités distales sont resserrées pour venir en appui contre le récipient 50, 52 et le serrer.

Comme cela sera décrit ci-dessous, pour chaque paire de bras 102a-d, l'ensemble mobile 204 comporte un mécanisme d'actionnement (500, Fig. 5) avec un plot d'activation 210 mobile entre une première position extrême et une deuxième position extrême, où dans la première position extrême, le mécanisme d'actionnement 500 positionne les bras 104a-b de ladite paire de bras 102a-d en position ouverte et où dans la deuxième position extrême, le mécanisme d'actionnement 500 positionne les bras 104a-b de ladite paire de bras 102a-d en position fermée. Ici le déplacement de chaque plot d'activation 210 est une translation radiale par rapport à l'axe principal.

Chaque plot d'activation 210 est contraint en appui contre la surface de guidage de la came 202 et lorsque l'ensemble mobile 204 tourne, chaque plot d'activation 210 est successivement déplacé par la came 202 de la première position extrême à la deuxième position et inversement et ce déplacement entraîne l'activation du mécanisme d'actionnement 500 qui déplace les bras 104a-b qui passent alors successivement de la position ouverte à la position fermée, puis à nouveau à la position ouverte.

La forme de la came 202, et plus particulièrement de sa surface de guidage, est telle que chaque plot d'activation 210 suit la surface de guidage pour passer successivement de la première position extrême à la deuxième position extrême et inversement.

Ainsi, au cours de la rotation de l'ensemble mobile 204, un récipient 50, 52 est amené par le système de convoyage d'entrée au niveau d'une paire de bras 102a-d dont les bras 104a-b sont en position ouverte, les bras 104a-b passent alors progressivement en position fermée lors de la rotation de l'ensemble mobile 204 pour serrer le récipient 50, 52, l'ensemble mobile 204 tourne alors avec le récipient 50, 52 ainsi serré, puis les bras 104a-b passent progressivement en position ouverte pour relâcher le récipient 50, 52 au niveau du système de convoyage de sortie.

Le mécanisme d'actionnement 500 permet de serrer un récipient 50, 52, mais du fait de leur implantation, le serrage des bras 104a-b est limité à des récipients 50, 52 qui ont un diamètre contenu dans un intervalle limité.

Afin de permettre l'utilisation de l'étoile 100 pour une gamme plus large de récipients 50, 52, il est nécessaire de modifier la position des bras 104a-b, en particulier, il est nécessaire de déplacer les axes verticaux de rotation 502 des deux bras 104a-b d'une paire 102a-d en les éloignant ou en les rapprochant l'un de l'autre. Ainsi, en écartant les axes verticaux de rotation 502, les bras 104a-b pourront serrer des récipients 50, 52 avec un plus grand diamètre et en rapprochant les axes verticaux de rotation 502, les bras 104a-b pourront serrer des récipients 50, 52 avec un plus petit diamètre.

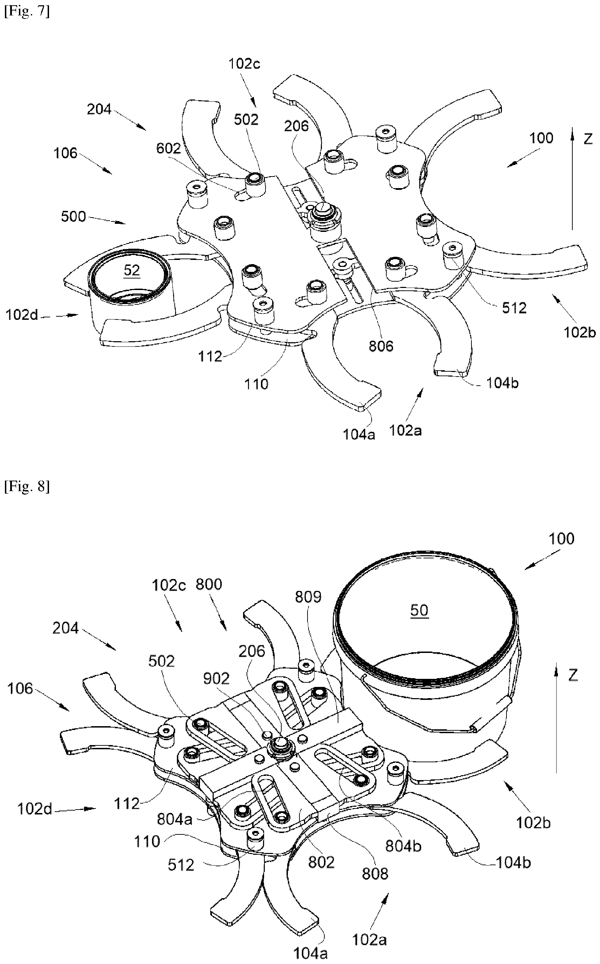

Afin de permettre l'adaptation de l'étoile 100, et plus particulièrement de l'écart entre les deux bras 104a-b d'une paire de bras 102a-d, l'ensemble mobile 204 comporte également un mécanisme de réglage (800, Fig. 8) qui déplace l'axe vertical de rotation 502 de chaque bras 104a-b entre une première position et une deuxième position et inversement, où la première position correspond à un écart permettant la prise d'un récipient de grand diamètre 50 et où la deuxième position correspond à un écart permettant la prise d'un récipient de petit diamètre 52. En effet, en déplaçant l'axe de rotation de chaque bras 104a-b, l'écart entre les extrémités distales est modifié. Dans la première position, les axes verticaux de rotation 502 des deux bras 104a-b de la paire 102a-d sont écartés l'un de l'autre, et dans la deuxième position, les axes verticaux de rotation 502 des deux bras 104a-b de la paire 102a-d sont rapprochés l'un de l'autre.

Afin de bloquer la position de chaque axe vertical de rotation 502, l'ensemble mobile 204 comporte également un mécanisme de verrouillage qui verrouille la position de l'axe vertical de rotation 502 de chaque bras 104a-b entre la première position et la deuxième position.

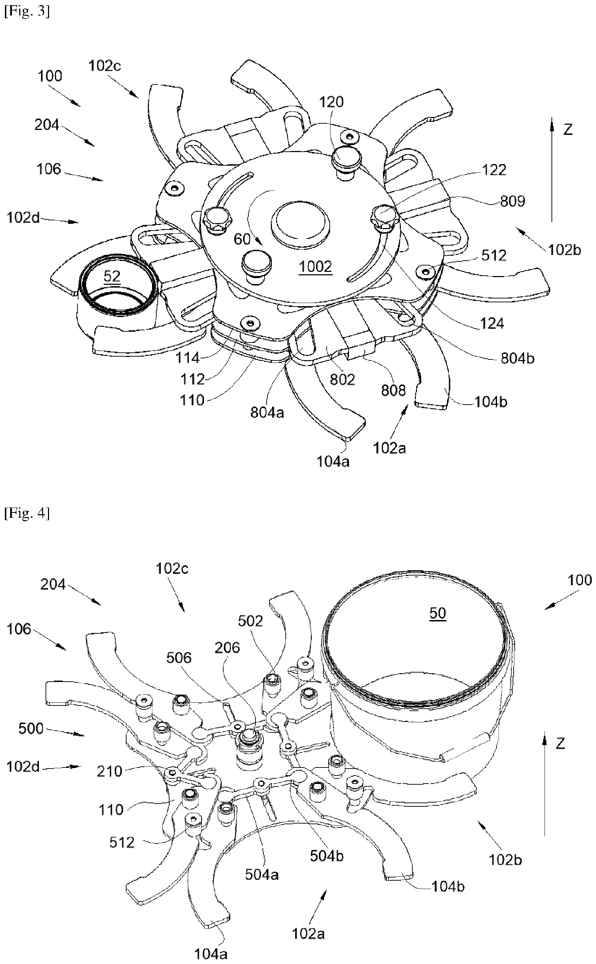

La Fig. 3 montre l'étoile 100 dans le cas d'un récipient de petit diamètre 52 où l'écart entre les bras 104a-b a été réduit.

Le châssis 106 comporte de bas en haut, c'est-à-dire depuis la came 202, une plaque inférieure 110, une plaque intermédiaire 112 et une plaque supérieure 114. Chaque plaque 110, 112, 114 est fixée à l'arbre 206. Dans le mode de réalisation de l'invention présenté ici, les plaques sont fixées entre elles par des entretoises 512, mais d'autres modes de fixation sont possibles.

La Fig. 4 et la Fig. 5 montrent le mécanisme d'actionnement 500 de chaque paire de bras 102a-d respectivement pour un récipient de grand diamètre 50 et pour un récipient de petit diamètre 50. Chaque mécanisme d'actionnement 500 est installé entre la plaque inférieure 110 et la plaque intermédiaire 112.

Dans le mode de réalisation de l'invention présenté ici, l'axe vertical de rotation 502 de chaque bras 104a-b est disposé entre l'extrémité distale et l'extrémité proximale. Ici chaque axe vertical de rotation 502 est monté mobile sur la plaque intermédiaire 112 comme cela est mieux vu sur les Figs. 6 et 7.

Pour chaque paire de bras 102a-d, le mécanisme d'actionnement 500 comporte une première bielle 504a et une deuxième bielle 504b. La première extrémité de la première bielle 504a est montée articulée au niveau de l'extrémité proximale d'un bras 104a, et la première extrémité de la deuxième bielle 504b est montée articulée au niveau de l'extrémité proximale de l'autre bras 104b. La deuxième extrémité de chaque bielle 504a-b est montée articulée sur le plot d'activation 210. Chacune des articulations prend ici la forme d'une rotation autour d'un axe vertical.

Le plot d'activation 210 est guidé radialement par une fente 506 qui traverse la plaque inférieure 110. La fente 506 est ici disposée de manière équidistante entre les axes verticaux de rotation 502 des deux bras 104a-b.

En fonction de la position de l'ensemble mobile 204 par rapport à la came 202, la position de plot d'activation 210 va entraîner une position différente des bielles 504a-b et donc une position différente des bras 104a-b. Ici, un éloignement du plot d'activation 210 de l'axe principal va écarter les bras 104a-b et un rapprochement du plot d'activation 210 de l'axe principal va resserrer les bras 104a-b.

La Fig. 6 et la Fig. 7 montrent la mise en place des axes verticaux de rotation 502 par rapport à la plaque intermédiaire 112. Pour chaque axe vertical de rotation 502, la plaque intermédiaire 112 présente une fenêtre 602 dont les dimensions sont supérieures au diamètre de l'axe vertical de rotation 502 qui la traverse pour autoriser le déplacement de l'axe vertical de rotation 502 par rapport à la fenêtre 602. La fenêtre 602 prend ici la forme d'un trou oblong formant un évidement arqué dont la position et l'orientation dépendent entre autres des dimensions des bras 104a-b et dont l'étendue angulaire dépend de l'étendue de la plage de diamètres à couvrir pour les récipients 50, 52.

Comme cela est visible sur la Fig. 6, pour un récipient de grand diamètre 50, tous les axes verticaux de rotation 504 sont disposés contre un des côtés de la fenêtre 602 et sur la Fig. 7, pour un récipient de petit diamètre 52, tous les axes verticaux de rotation 504 sont disposés contre l'autre côté de la fenêtre 602.

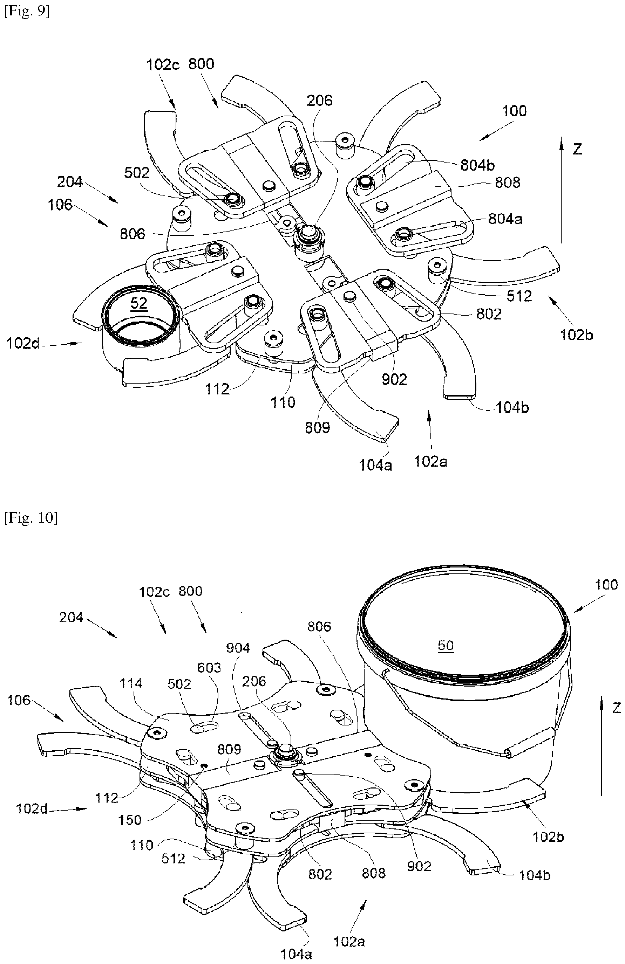

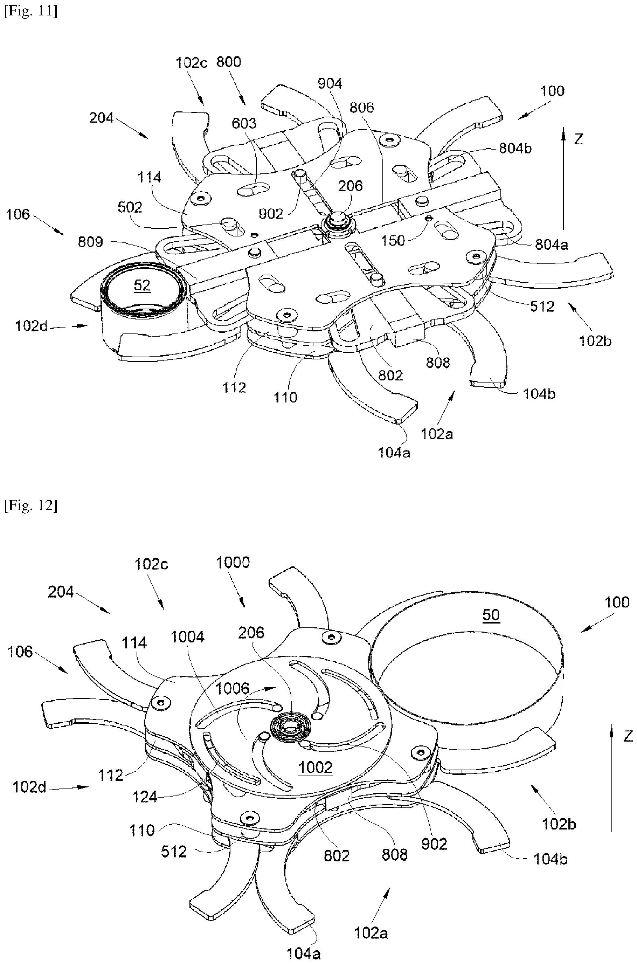

Comme cela est mieux vu sur les Figs. 10 et 11, la plaque supérieure 114 présente également des fenêtres 603 identiques aux fenêtres 602 de la plaque intermédiaire 112 pour la mise en place des axes verticaux de rotation 502.

La Fig. 8 et la Fig. 9 montrent le mécanisme de réglage 800 qui est agencé entre la plaque intermédiaire 112 et la plaque supérieure 114.

Pour chaque paire de bras 102a-d, le mécanisme de réglage 800 comporte un coulisseau 802 qui est monté mobile en translation radialement par rapport à l'axe principal, et chaque coulisseau 802 est ainsi mobile entre une position rentrée (Fig. 8) correspondant à un récipient de grand diamètre 50 et une position sortie (Fig. 9) correspondant à un récipient de petit diamètre 52.

Pour chaque axe vertical de rotation 502 d'une paire de bras 102a-d, le coulisseau 802 associé présente une rainure 804a-b à travers laquelle passe l'axe vertical de rotation 502. Chaque rainure 804a-b forme un guide pour l'axe vertical de rotation 502.

Les deux rainures 804a-b d'un coulisseau 802 forment un V dans un plan perpendiculaire à l'axe principal, dont la pointe est orientée vers l'axe principal. La distance entre les extrémités des deux rainures 804a-b est ainsi plus petite du côté de l'axe principal et plus grande du côté extérieur.

Ainsi, en position rentrée, les axes verticaux de rotation 504 se positionnent au niveau des extrémités les plus écartées (à l'extérieur) et sont donc éloignés l'un de l'autre pour permettre la prise d'un récipient de grand diamètre 50.

Tandis qu'en position sortie, les axes verticaux de rotation 504 se positionnent au niveau des extrémités les plus rapprochées (à l'intérieur) et sont donc rapprochés l'un de l'autre pour permettre la prise d'un récipient de petit diamètre 52.

Les rainures 804a-b sont disposées symétriquement par rapport à un plan vertical de symétrie entre les deux bras 104a-b.

Pour l'ensemble des coulisseaux 802, le mécanisme de réglage 800 comporte un système de déplacement (1000 Fig. 12) qui déplace chaque coulisseau 802 de la position rentrée à la position sortie et inversement.

Le déplacement en translation de chaque coulisseau 802 est assuré par une rainure de guidage 806 s'étendant radialement et réalisée ici dans la plaque intermédiaire 112 pour deux coulisseaux 802 et dans la plaque supérieure 114 pour les deux autres coulisseaux 802. Bien sûr, il est également possible de réaliser l'ensemble des rainures de guidage 806 dans la plaque intermédiaire 112 ou dans la plaque supérieure 114.

Chaque coulisseau 802 présente un prisme rectangulaire 809 qui coopère avec la rainure de guidage 806 associée pour réaliser la translation du coulisseau 802.

La Fig. 10 et la Fig. 11 montrent l'étoile 100 avec la plaque supérieure 114.

Chaque coulisseau 802 présente un plot d'entraînement 902 qui coopère avec le système de déplacement 1000 pour déplacer ledit coulisseau 802.

Dans la configuration présentée sur les Figs. 10 et 11, la plaque supérieure 114 présente des rainures radiales 904 pour permettre le passage des plots d'entraînement 902 des coulisseaux 802 guidés par la plaque intermédiaire 112.

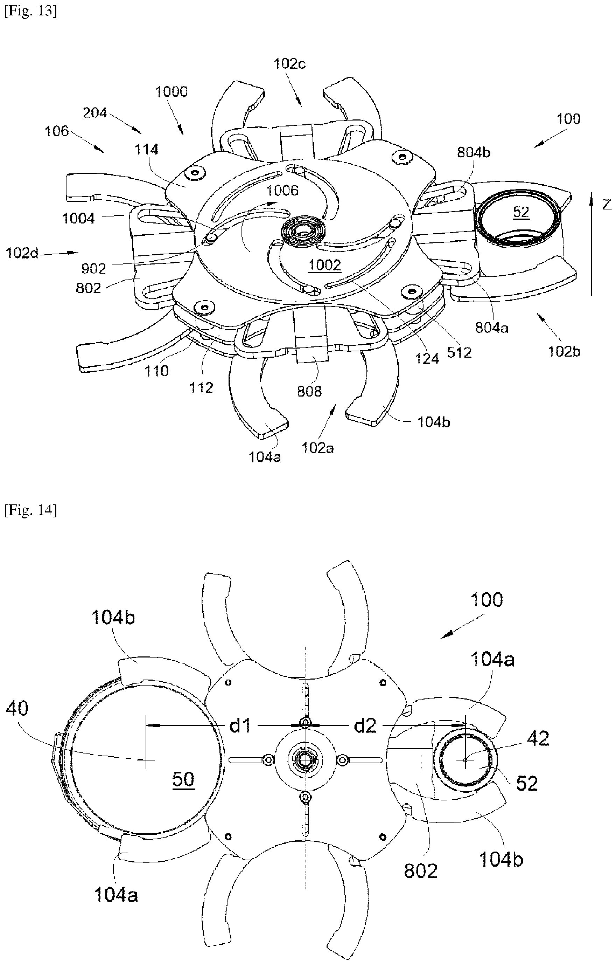

La Fig. 12 et la Fig. 13 montrent le système de déplacement 1000 qui comporte un disque 1002 qui est vu ici en coupe par un plan perpendiculaire à l'axe principal.

Le disque 1002 est monté mobile en rotation autour de l'axe principal.

Pour chaque plot d'entraînement 902, le disque 1002 comporte un trou 1004 prenant la forme d'un arc de disque et dans lequel loge le plot d'entraînement 902. Le trou 1004 présente une première extrémité qui correspond à la position du plot d'entraînement 902 en position rentrée (Fig. 12) et une deuxième extrémité qui correspond à la position du plot d'entraînement 902 en position sortie (Fig. 13). La première extrémité est au voisinage du centre du disque 1002, c'est-à-dire au voisinage de l'axe principal et la deuxième position est au voisinage de la périphérie extérieure du disque 1002.

Chaque trou 1004 est ainsi conformé pour déplacer le plot d'entraînement 902 d'une position correspondant à la position rentrée du coulisseau 802 à une position correspondant à la position sortie du coulisseau 802 lorsque le disque 1002 est déplacé en rotation dans un sens (1006) et pour déplacer le plot d'entraînement 902 de la position correspondant à la position sortie du coulisseau 802 à la position correspondant à la position rentrée du coulisseau 802 lorsque le disque 1002 est déplacé en rotation dans un sens opposé (inverse de 1006).

Pour faciliter la prise en main du disque 1002, celui-ci comporte des poignées 120.

Dans le mode de réalisation de l'invention présenté ici, le mécanisme de verrouillage prend la forme de deux boutons de serrage 122 avec une tige filetée qui se visse dans la plaque supérieure 114 à travers un évidement 124 du disque 1002. A cette fin, la plaque supérieure 114 présente un trou taraudé 150 pour chaque bouton de serrage 122.

A partir de la position de la Fig. 12, une rotation du disque 1002 dans le sens de la flèche 1106, va entraîner le déplacement de chaque trou 1004 et comme chaque plot d'entraînement 902 est contraint de se déplacer en translation, il va se déplacer le long du trou 1004 pour atteindre la deuxième extrémité, assurant ainsi le passage de chaque coulisseau 802 de la position rentrée (Fig. 12) à la position sortie (Fig. 13) et permettant ainsi un réglage de l'écartement des bras 104a-b.

Le maintien de chaque plot d'activation 210 contre la surface de guidage de la came 202 peut être assuré par exemple par un élément de rappel, comme un ressort, ou une lame ressort qui appuie ou tire sur le plot d'activation 210. Selon un autre mode de réalisation, il est également possible de prévoir que le plot d'activation 210 suive une rainure formée dans la came 202.

La Fig. 14 est une image réalisée par montage entre une étoile 100 réglée pour un récipient de grand diamètre 50 à gauche et une étoile 100 réglée pour un récipient de petit diamètre 52 à droite.

Chaque récipient 50, 52 est pris entre les extrémités distales des bras 104a-b et le coulisseau 802 qui est en position rentrée à gauche et en position sortie à droite.

Le coulisseau 802 comporte une surface de contact 808 qui constitue un troisième point de contact sur le récipient 50, 52 et les deux autres points de contact sont les points de contact entre le récipient 50, 52 et les bras 104a-b.

La surface de contact 808 est disposée sur l'extrémité du coulisseau 802 qui est perpendiculaire à la direction radiale par rapport à l'axe principal et qui se trouve entre les deux bras 104a-b.

Lorsque le coulisseau 802 est en position sortie, la surface de contact 808 sort du châssis 106 pour venir s'appuyer contre la surface du récipient de petit diamètre 52.

La distance de déplacement de la surface de contact 808 entre la position rentrée et la position sortie du coulisseau 802 ainsi que les changements de position des axes verticaux de rotation 502 des bras 104a-b sont tels que la position du barycentre des deux points de contact des bras 104a-b sur le récipient 50, 52 et du point de contact de la surface de contact 808 sur le récipient 50, 52 reste inchangée entre un récipient de grand diamètre 50 et un récipient de petit diamètre 52, c'est-à-dire quelle que soit la position du coulisseau 802 entre la position rentrée et la position sortie. Ce barycentre est aligné avec l'axe vertical du récipient 50, 52.

La loi de déplacement de la surface de contact 808 et la loi de déplacement des axes verticaux de rotation 502 des bras 104a-b dépendent des dimensions des différents éléments constituant l'étoile 100 et les diamètres extrêmes des récipients utilisés. Cette loi peut être déterminée par des constructions et calculs géométriques.

La première référence 40 représente le centre du récipient de grand diamètre 50 et le barycentre des trois points de contact des bras 104a-b et du coulisseau 802 sur ce récipient.

La deuxième référence 42 représente le centre du récipient de petit diamètre 52 et le barycentre des trois points de contact des bras 104a-b et du coulisseau 802 sur ce récipient.

La distance horizontale dl entre l'axe principal et la première référence 40 est égale à la distance horizontale d2 entre l'axe principal et la deuxième référence 42.

Ainsi, la position de l'axe du récipient 50, 52 reste toujours à la même position et il n'est pas nécessaire de déplacer le système de remplissage qui remplit le récipient.

Pour assurer un bon appui du récipient 50, 52 contre l'étoile 100 et plus particulièrement contre la surface de contact 808, les points de contact des bras 104a-b et de la surface de contact 808 sur le récipient 50, 52 sont disposés de manière à ce que, dans un plan horizontal perpendiculaire à l'axe principal, chaque angle défini à partir du barycentre 40, 42 des deux points de contact des bras 104a-b sur le récipient 50, 52 et du point de contact de la surface de contact 808 sur le récipient 50, 52, et délimité entre le point de contact de la surface de contact 808 et un des points de contact d'un bras 104a-b est supérieur à 90°. Ainsi, chaque point de contact des bras 104a-b passe au-delà du centre du récipient 50, 52 par rapport au point de contact de la surface de contact 808.

## Revendications

1. Etoile (100) pour une machine de conditionnement rotative pour des récipients (50, 52), l'étoile (100) comportant :
- un arbre (206) qui s'étend verticalement autour d'un axe principal et qui est animé d'un mouvement de rotation autour dudit axe principal,
- un ensemble mobile (204) qui comporte :
- un châssis (106) fixé audit arbre (206),
- une pluralité de paires de bras (102a-d), chacune comportant deux bras (104a-b), chacun comportant une extrémité distale et une extrémité proximale et monté articulé sur le châssis (106) autour d'un axe vertical de rotation (502), où les bras (104a-b) de chaque paire de bras (102a-d) sont mobiles entre une position ouverte et une position fermée et inversement,
- pour chaque paire de bras (102a-d), un mécanisme d'actionnement (500) avec un plot d'activation (210) mobile entre une première position extrême et une deuxième position extrême, où dans la première position extrême, le mécanisme d'actionnement (500) positionne les bras (104a-b) de ladite paire de bras (102a-d) en position ouverte et où dans la deuxième position extrême, le mécanisme d'actionnement (500) positionne les bras (104a-b) de ladite paire de bras (102a-d) en position fermée,
- une came (202) fixe par rapport à l'ensemble mobile (204) et avec une surface de guidage où la forme de la surface de guidage est telle que chaque plot d'activation (210) suit la surface de guidage pour passer successivement de la première position extrême à la deuxième position extrême et inversement, ladite étoile (100) étant **caractérisée en ce que** ledit ensemble mobile (204) comporte:
- un mécanisme de réglage (800) qui déplace l'axe vertical de rotation (502) de chaque bras (104a-b) entre une première position et une deuxième position et inversement, et
- un mécanisme de verrouillage qui verrouille la position de l'axe vertical de rotation (502) de chaque bras (104a-b) entre la première position et la deuxième position.

2. Etoile (100) selon la revendication 1, **caractérisée en ce que** l'axe vertical de rotation (502) de chaque bras (104a-b) est disposé entre l'extrémité distale et l'extrémité proximale, **en ce que** chaque mécanisme d'actionnement (500) comporte une première bielle (504a) et une deuxième bielle (504b), **en ce que** la première extrémité de la première bielle (504a) est montée articulée au niveau de l'extrémité proximale d'un bras (104a), **en ce que** la première extrémité de la deuxième bielle (504b) est montée articulée au niveau de l'extrémité proximale de l'autre bras (104b), et **en ce que** la deuxième extrémité de chaque bielle (504a-b) est montée articulée sur le plot d'activation (210).

3. Etoile (100) selon l'une des revendications 1 ou 2, **caractérisée en ce que** pour chaque paire de bras (102a-d), le mécanisme de réglage (800) comporte un coulisseau (802) qui est monté mobile en translation radialement par rapport à l'axe principal entre une position rentrée et une position sortie, **en ce que** pour chaque axe vertical de rotation (502) de la paire de bras (102a-d) associée, le coulisseau (802) présente une rainure (804a-b) à travers laquelle passe l'axe vertical de rotation (502), **en ce que** les deux rainures (804a-b) du coulisseau (802) forment un V dont la pointe est orientée vers l'axe principal, et **en ce que** le mécanisme de réglage (800) comporte un système de déplacement qui déplace chaque coulisseau (802) de la position rentrée à la position sortie et inversement.

4. Etoile (100) selon la revendication 3, **caractérisée en ce que** le coulisseau (802) comporte une surface de contact (808) qui constitue un point de contact sur le récipient (50, 52).

5. Etoile (100) selon la revendication 4, **caractérisée en ce que** la distance de déplacement de la surface de contact (808) entre la position rentrée et la position sortie du coulisseau (802) ainsi que les changements de position des axes verticaux de rotation (502) des bras (104a-b) sont tels que la position du barycentre des deux points de contact des bras (104a-b) sur le récipient (50, 52) et du point de contact de la surface de contact (808) sur le récipient (50, 52) reste inchangée quelle que soit la position du coulisseau (802) entre la position rentrée et la position sortie.

6. Etoile (100) selon l'une des revendications 4 ou 5, **caractérisée en ce que** chaque angle défini à partir d'un barycentre (40, 42) des deux points de contact des bras (104a-b) sur le récipient (50, 52) et du point de contact de la surface de contact (808) sur le récipient (50, 52), et délimité entre le point de contact de la surface de contact (808) et un des points de contact d'un bras (104a-b) est supérieur à 90°.

7. Etoile (100) selon l'une des revendications 3 à 6, **caractérisée en ce que** chaque coulisseau (802) comporte un plot d'entraînement (902), **en ce que** le système de déplacement (1000) comporte un disque (1002) monté mobile en rotation autour de l'axe principal, **en ce que** pour chaque plot d'entraînement (902), le disque (1002) comporte un trou (1004) dans lequel loge le plot d'entraînement (902), **en ce que** chaque trou (1004) est conformé pour déplacer le plot d'entraînement (902) d'une position correspondant à la position rentrée du coulisseau (802) à une position correspondant à la position sortie du coulisseau (802) lorsque le disque (1002) est déplacé en rotation dans un sens et pour déplacer le plot d'entraînement (902) de la position correspondant à la position sortie du coulisseau (802) à la position correspondant à la position rentrée du coulisseau (802) lorsque le disque (1002) est déplacé en rotation dans un sens opposé.

8. Machine de conditionnement rotative pour des récipients (50, 52) comportant un système de convoyage d'entrée, un système de convoyage de sortie et une étoile (100) selon l'une des revendications précédentes, où le système de convoyage d'entrée apporte les récipients (50, 52) au niveau de l'étoile (100) et où le système de convoyage de sortie prend les récipients (50, 52) au niveau de l'étoile (100) pour les retirer.

## Patentansprüche

1. Stern (100) für eine rotierende Verpackungsmaschine für Behälter (50, 52), wobei der Stern (100) Folgendes umfasst:
- eine Welle (206), die sich vertikal um eine Hauptachse erstreckt und eine Drehbewegung um die Hauptachse ausführt,
- eine mobile Anordnung (204), die Folgendes umfasst:
- ein Gestell (106), das an der Welle (206) montiert ist,
- eine Vielzahl von Armpaaren (102a-d), die jeweils zwei Arme (104a-b) umfassen, die jeweils ein distales Ende und ein proximales Ende umfassen und um eine vertikale Drehachse (502) gelenkig an dem Gestell (106) befestigt sind, wobei die Arme (104a-b) jedes Armpaares (102a-d) zwischen einer geöffneten Position und einer geschlossenen Position und umgekehrt beweglich sind,
- für jedes Armpaar (102a-d), einen Betätigungsmechanismus (500) mit einem Aktivierungsstift (210), der zwischen einer ersten Endposition und einer zweiten Endposition beweglich ist, wobei der Betätigungsmechanismus (500) in der ersten Endposition die Arme (104a-b) des Armpaares (102a-d) in der geöffneten Position positioniert und wobei der Betätigungsmechanismus (500) in der zweiten Endposition die Arme (104a-b) des Armpaares (102a-d) in der geschlossenen Position positioniert,
- einen Nocken (202), der mit Bezug auf die mobile Anordnung (204) fest ist und eine Führungsfläche aufweist, wobei die Form der Führungsfläche derart ist, dass jeder Aktivierungsstift (210) der Führungsfläche folgt, um nacheinander von der ersten Endposition in die zweite Endposition und umgekehrt zu wechseln,
wobei der Stern (100) **dadurch gekennzeichnet ist, dass** die mobile Anordnung (204) Folgendes umfasst:
- einen Verstellmechanismus (800), der die vertikale Drehachse (502) jedes Arms (104a-b) zwischen einer ersten Position und einer zweiten Position und umgekehrt verfährt, und
- einen Verriegelungsmechanismus, der die Position der vertikalen Drehachse (502) jedes Arms (104a-b) zwischen der ersten Position und der zweiten Position verriegelt.

2. Stern (100) nach Anspruch 1, **dadurch gekennzeichnet, dass** die vertikale Drehachse (502) jedes Arms (104a-b) zwischen dem distalen Ende und dem proximalen Ende angeordnet ist, dass jeder Betätigungsmechanismus (500) eine erste Verbindungsstange (504a) und eine zweite Verbindungsstange (504b) umfasst, dass das erste Ende der ersten Verbindungsstange (504a) gelenkig an dem proximalen Ende eines Arms (104a) befestigt ist, dass das erste Ende der zweiten Verbindungsstange (504b) gelenkig an dem proximalen Ende des anderen Arms (104b) befestigt ist und dass das zweite Ende jeder Verbindungsstange (504a-b) gelenkig an dem Aktivierungsstift (210) befestigt ist.

3. Stern (100) nach einem der Ansprüche 1 oder 2, **dadurch gekennzeichnet, dass** der Verstellmechanismus (800) für jedes Armpaar (102a-d) eine Gleitplatte (802) umfasst, die mit Bezug auf die Hauptachse zwischen einer eingefahrenen Position und einer ausgefahrenen Position radial verschiebbar befestigt ist, dass die Gleitplatte (802) für jede vertikale Drehachse (502) des zugehörigen Armpaares (102a-d) eine Nut (804a-b) aufweist, durch die die vertikale Drehachse (502) verläuft, dass die zwei Nuten (804a-b) der Gleitplatte (802) ein V bilden, dessen Spitze zu der Hauptachse gerichtet ist, und dass der Verstellmechanismus (800) ein Verfahrsystem umfasst, das jede Gleitplatte (802) von der eingefahrenen Position in die ausgefahrene Position und umgekehrt verfährt.

4. Stern (100) nach Anspruch 3, **dadurch gekennzeichnet, dass** die Gleitplatte (802) eine Kontaktfläche (808) umfasst, die einen Kontaktpunkt an dem Behälter (50, 52) darstellt.

5. Stern (100) nach Anspruch 4, **dadurch gekennzeichnet, dass** die Verfahrstrecke der Kontaktfläche (808) zwischen der eingefahrenen Position und der ausgefahrenen Position der Gleitplatte (802) sowie die Positionsänderungen der vertikalen Drehachsen (502) der Arme (104a-b) derart sind, dass die Position des Schwerpunkts der zwei Kontaktpunkte der Arme (104a-b) an dem Behälter (50, 52) und des Kontaktpunkts der Kontaktfläche (808) an dem Behälter (50, 52) unabhängig von der Position der Gleitplatte (802) zwischen der eingefahrenen Position und der ausgefahrenen Position unverändert bleibt.

6. Stern (100) nach einem der Ansprüche 4 oder 5, **dadurch gekennzeichnet, dass** jeder Winkel, der ausgehend von einem Schwerpunkt (40, 42) der zwei Kontaktpunkte der Arme (104a-b) an dem Behälter (50, 52) und des Kontaktpunkts der Kontaktfläche (808) an dem Behälter (50, 52) definiert ist und zwischen dem Kontaktpunkt der Kontaktfläche (808) und einem der Kontaktpunkte eines Arms (104a-b) begrenzt wird, größer als 90° ist.

7. Stern (100) nach einem der Ansprüche 3 bis 6, **dadurch gekennzeichnet, dass** jede Gleitplatte (802) einen Antriebsstift (902) umfasst, dass das Verfahrsystem (1000) eine Scheibe (1002) umfasst, die drehbar um die Hauptachse befestigt ist, dass die Scheibe (1002) für jeden Antriebsstift (902) ein Loch (1004) umfasst, in dem der Antriebsstift (902) aufgenommen ist, dass jedes Loch (1004) dazu angepasst ist, den Antriebsstift (902) von einer Position, die der eingefahrenen Position der Gleitplatte (802) entspricht, in eine Position, die der ausgefahrenen Position der Gleitplatte (802) entspricht, zu verfahren, wenn die Scheibe (1002) in einer Richtung gedreht wird, und den Antriebsstift (902) von der Position, die der ausgefahrenen Position der Gleitplatte (802) entspricht, in die Position, die der eingefahrenen Position der Gleitplatte (802) entspricht, zu verfahren, wenn die Scheibe (1002) in einer entgegengesetzten Richtung gedreht wird.

8. Rotierende Verpackungsmaschine für Behälter (50, 52), die ein Eingangsbeförderungssystem, ein Ausgangsbeförderungssystem und einen Stern (100) nach einem der vorhergehenden Ansprüche umfasst, wobei das Eingangsbeförderungssystem dem Stern (100) die Behälter (50, 52) zuführt und wobei das Ausgangsbeförderungssystem die Behälter (50, 52) an dem Stern (100) aufnimmt, um sie zu entfernen.

## Claims

1. Star wheel (100) for a rotary packing machine for containers (50, 52), the star wheel (100) comprising:
- a shaft (206) that extends vertically about a main axis and that is driven by a rotary movement about said main axis;
- a movable assembly (204), which comprises:
- a frame (106) fixed to said shaft (206);
- a plurality of pairs of arms (102a-d), each comprising two arms (104a-b), each comprising a distal end and a proximal end and hinge mounted on the frame (106) about a vertical rotation axis (502), where the arms (104a-b) of each pair of arms (102 a-d) are mobile between an open position and a closed position, and vice versa;
- for each pair of arms (102a-d), an activation mechanism (500) which has an activation pad (210) mobile between a first limit position and a second limit position, where, in the first limit position, the activation mechanism (500) positions the arms (104a-b) of said pair of arms (102a-d) in the open position and where, in the second limit position, the activation mechanism (500) positions the arms (104a-b) of said pair of arms (102a-d) in the closed position;
- a cam (202), which is fixed relative to the movable assembly (204) and has a guide surface, where the shape of the guide surface is such that each activation pad (210) follows the guide surface in order to successively transition from the first limit position to the second limit position, and vice versa
said star wheel (100) being **characterized in that** the movable assembly (204) comprises:
- an adjustment mechanism (800), which moves the vertical rotation axis (502) of each arm (104a-b) between a first position and a second position, and vice versa; and
- a locking mechanism, which locks the position of the vertical rotation axis (502) of each arm (104a-b) between the first position and the second position.

2. Star wheel (100) according to Claim 1, **characterized in that** the vertical rotation axis (502) of each arm (104a-b) is disposed between the distal end and the proximal end, **in that** each activation mechanism (500) comprises a first connecting rod (504a) and a second connecting rod (504b), **in that** the first end of the first connecting rod (504a) is hinge mounted at the proximal end of an arm (104a), **in that** the first end of the second connecting rod (504b) is hinge mounted at the proximal end of the other arm (104b), and **in that** the second end of each connecting rod (504a-b) is hinge mounted on the activation pad (210).

3. Star wheel (100) according to one of Claims 1 or 2, **characterized in that**, for each pair of arms (102a-d), the adjustment mechanism (800) comprises a slide (802), which is mounted to freely translate radially relative to the main axis between a retracted position and a deployed position, **in that**, for each vertical rotation axis (502) of the associated pair of arms (102a-d), the slide (802) has a groove (804a-b), through which the vertical rotation axis (502) passes, **in that** the two grooves (804a-b) of the slide (802) form a V, the tip of which is oriented towards the main axis, and **in that** the adjustment mechanism (800) comprises a movement system, which moves each slide (802) from the retracted position to the deployed position, and vice versa.

4. Star wheel (100) according to Claim 3, **characterized in that** the slide (802) comprises a contact surface (808), which forms a contact point on the container (50, 52).

5. Star wheel (100) according to Claim 4, **characterized in that** the movement distance of the contact surface (808) between the retracted position and the deployed position of the slide (802), as well as the changes of position of the vertical rotation axes (502) of the arms (104a-b), are such that the position of the barycentre of the two contact points of the arms (104a-b) on the container (50, 52), and of the contact point of the contact surface (808) on the container (50, 52), remains unchanged irrespective of the position of the slide (802) between the retracted position and the deployed position.

6. Star wheel (100) according to one of Claims 4 or 5, **characterized in that** each angle defined from a barycentre (40, 42) of the two contact points of the arms (104a-b) on the container (50, 52) and from the contact point of the contact surface (808) on the container (50, 52), and demarcated between the contact point of the contact surface (808) and one of the contact points of an arm (104a-b), is greater than 90°.

7. Star wheel (100) according to one of Claims 3 to 6, **characterized in that** each slide (802) comprises a drive pad (902), **in that** the movement system (1000) comprises a disc (1002) mounted to rotate freely about the main axis, **in that**, for each drive pad (902), the disc (1002) comprises a hole (1004), in which the drive pad (902) is housed, **in that** each hole (1004) is designed to move the drive pad (902) from a position corresponding to the retracted position of the slide (802) to a position corresponding to the deployed position of the slide (802) when the disc (1002) is rotationally moved in one direction, and to move the drive pad (902) from the position corresponding to the deployed position of the slide (802) to the position corresponding to the retracted position of the slide (802) when the disc (1002) is rotationally moved in an opposite direction.

8. Rotary packing machine for containers (50, 52) comprising an infeed conveyor system, an outfeed conveyor system and a star wheel (100) according to one of the preceding claims, where the infeed conveyor system conveys the containers (50, 52) to the star wheel (100) and where the outfeed conveyor system takes the containers (50, 52) from the star wheel (100) in order to remove them.
